# FASCICULE DE BREVET EUROPEEN

(11) **EP 0 495 739 B1**
(45) Date de publication et mention de la délivrance du brevet: **29.03.1995**
(21) Numéro de dépôt: 92440005.4
(22) Date de dépôt: 20.01.1992
(51) Int. Cl.: B29C 44/00, B08B 17/00, E21F 17/00

(54) **Enveloppe de sécurité pour le moussage de résines dégageant des gaz dangereux, en particulier de résines phénoliques et urée-formaldéhydes**
Sicherheitshülle zum Schäumen von giftige Gase freigebenden Kunststoffen, insbesondere für Phenol- und Urea-Formaldehyd
Safety envelope for foaming resins that release dangerous gases, especially phenol- and urea-formaldehyde resins

(30) Priorité: 18.01.1991 FR 9100823
(43) Date de publication de la demande: 22.07.1992
(73) Titulaire: A. WEBER, S.A., F-57520 Rouhling (FR)
(72) Inventeur: Weber, Adolphe, F-57520 Rouhling (FR)
(74) Mandataire: Nuss, Pierre

(56) Documents cités:
- EP-A- 0 397 589
- DE-A- 3 940 824
- DE-C- 3 644 554
- NL-A- 8 400 276
- US-A- 4 102 138
- MODERN PACKAGING. vol. 11, Novembre 1954, NEW YORK US pages 122 - 123; 'Triple film envelope with rupturable membrane permits mixing and pouring'
- PATENT ABSTRACTS OF JAPAN vol. 9, no. 77 (M-369)(1800) 6 Avril 1985 & JP-A-59 207 219 (YOSHIKAZU ANDOU) 24 Novembre 1984

## Description

La présente invention concerne le domaine des mines et des travaux publics, en particulier de remplissage par des mousses, et a pour objet une enveloppe de sécurité pour le moussage de résines dégageant des gaz dangereux, en particulier de résines phénoliques et urée-formaldéhydes.

Lors de la mise en oeuvre, dans les mines ou dans les travaux publics, de grandes quantités de résines phénoliques, polyuréthanes et urée-formaldéhydes, en particulier pour le remplissage et/ou l'étaiement, il se produit un important dégagement de gaz toxiques, tels que les phénols, l'aldéhyde formique et les diisocyanates.

Un tel dégagement est particulièrement dangereux dans le cas d'utilisation de ces mousses dans les mines ou en atmosphère confinée, leur mise en oeuvre nécessitant alors le port de masques filtrants, ainsi qu'une forte ventilation afin d'augmenter le taux de dilution des gaz.

Pour réaliser de tels remplissages, il est connu de pomper directement des produits moussants dans les cavités, les gaz de moussage étant évacués dans l'atmosphère (NL-A-8 400 276).

La présente invention a pour but de pallier ces inconvénients.

Elle a, en effet, pour objet une enveloppe pour le moussage de résines dégageant des gaz dangereux, en particulier de résines phénoliques et urée-formaldéhydes, dans laquelle les composants de la mousse sont mélangés, en particulier pour la réalisation de dispositifs de calage, d'obturation ou de barrages, notamment dans le domaine des travaux publics et des mines caractérisée en ce qu'elle est pourvue, de préférence dans sa partie supérieure, d'un dispositif de sécurité réalisant le filtrage et la fixation des gaz toxiques dégagés, lors de la réaction de moussage.

L'invention sera mieux comprise, grâce à la description ci-après, qui se rapporte à un mode de réalisation préféré, donné à titre d'exemple non limitatif, et expliqué avec référence au dessin schématique annexé, dans lequel :
la figure 1 est une vue en élévation latérale et en coupe d'une enveloppe conforme à l'invention ;
la figure 2 est une vue en élévation frontale et en coupe de l'enveloppe suivant la figure 1, et
la figure 3 est une vue en perspective d'une enveloppe de grande contenance.

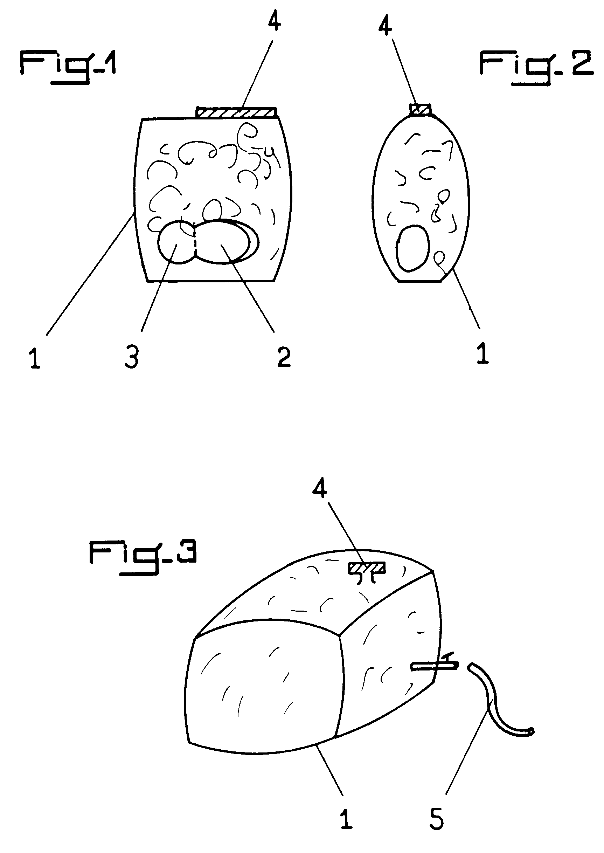

Conformément à l'invention et comme le montrent les figures 1 à 3 du dessin annexé, l'enveloppe 1 pour le moussage de résines dégageant des gaz dangereux, en particulier de résines phénoliques et urée-formaldéhydes, dans laquelle les composants de la mousse sont mélangés, est pourvue, de préférence dans sa partie supérieure, d'un dispositif de sécurité 4 réalisant le filtrage et la fixation des gaz toxiques dégagés, lors de la réaction de moussage.

Les résines utilisées sont généralement des résines phénoliques du type résol additionnées d'un liquide ou d'un solide porogène, ainsi que d'autres additifs et mélangées à un catalyseur acide ou encore des résines urée-formol additionnées de catalyseur acide.

Selon une caractéristique de l'invention, l'enveloppe se présente avantageusement sous forme d'un coussin autogonflant, dans lequel les composants, résine 2 et catalyseur 3, de la mousse, sont disposés sous des emballages séparés et sont mélangés manuellement lors de la mise en oeuvre des mousses, après éclatement de leurs emballages, les gaz dégagés lors du moussage étant filtrés et fixés dans le dispositif de sécurité 4.

Au moment de l'expansion de la résine, les gaz toxiques dégagés par suite de la réaction sont fixés dans le dispositif filtrant 4, de sorte qu'une pollution de l'atmosphère ambiante, en particulier de l'atmosphère confinée des mines, est évitée.

Dans le mode de réalisation selon les figures 1 et 2, la résine 1 et le catalyseur 3 sont avantageusement disposés dans des emballages indépendants, qui éclatent lors de la mise en oeuvre de l'enveloppe 1, afin de réaliser un mélange des composants et de démarrer la réaction de moussage.

Il est également possible, comme le montre la figure 3, en particulier dans le cas d'utilisation d'enveloppes de grandes ou de très grandes contenances, d'alimenter ces enveloppes directement en mélanges moussants au moyen d'une conduite 5 raccordée à un dispositif de mélange et de transport (non représenté).

Le dispositif de sécurité 4 réalisant le filtrage des gaz provenant de la réaction de moussage est constitué, de préférence, par une cartouche à charbon actif ou un support cellulosique imbibé de bisulfite de soude, ainsi que par des absorbeurs d'humidité tels que des gels de silice.

Ce dispositif de sécurité 4 est avantageusement disposé préalablement en position haute par rapport à l'enveloppe 1, lors de la mise en place de cette dernière et maintenu manuellement au début du moussage, dans le cas de petits coussins (figures 1 et 2), ou amené et maintenu en position haute par gonflage préalable de l'enveloppe, 1 dans le cas d'une enveloppe de grand volume (figure 3), ce gonflage préalable pouvant être effectué par l'intermédiaire de la conduite 5 d'amenée de la mousse en formation avant ladite amenée de la mousse.

L'enveloppe 1 est avantageusement réalisée en une matière souple antistatique ou non. Ainsi, il est possible d'éviter tout risque de formation d'étincelles par électricité statique et une réaction d'inflammation ou d'explosion des gaz dégagés.

Grâce à l'invention il est possible de réaliser des dispositifs de calage, d'obturation ou des barrages utilisables en particulier dans le domaine des travaux publics et des mines, dont la mise en oeuvre s'effectue par expansion de mousses, notamment phénoliques et urée-formaldéhydes, n'occasionnant aucun dégagement de gaz polluants et/ou toxiques, de sorte qu'il est possible de garantir des conditions de travail optimales pour les opérateurs.

Bien entendu, l'invention n'est pas limitée au mode de réalisation décrit et représenté au dessin annexé. Des modifications restent possibles, notamment du point de vue de la constitution des divers éléments ou par substitution d'équivalents techniques, sans sortir pour autant du domaine de protection de l'invention.

## Revendications

1. Enveloppe pour le moussage de résines dégageant des gaz dangereux, en particulier de résines phénoliques et urée-formaldéhydes, dans laquelle les composants de la mousse sont mélangés, en particulier pour la réalisation de dispositifs de calage, d'obturation ou de barrages, notamment dans le domaine des travaux publics et des mines, caractérisée en ce qu'elle est pourvue, de préférence dans sa partie supérieure, d'un dispositif de sécurité (4) réalisant le filtrage et la fixation des gaz toxiques dégagés, lors de la réaction de moussage.

2. Enveloppe, suivant la revendication 1, caractérisée en ce qu'elle se présente avantageusement sous forme d'un coussin autogonflant, dans lequel les composants, résine (2) et catalyseur (3), de la mousse, sont disposés sous des emballages séparés et sont mélangés manuellement lors de la mise en oeuvre des mousses, après éclatement de leurs emballages, les gaz dégagés lors du moussage étant filtrés et fixés dans le dispositif de sécurité (4).

3. Enveloppe, suivant la revendication 1, caractérisée en ce qu'elle présente une grande ou une très grande contenance et en ce qu'elle est alimentée en résine et catalyseur formant les composants de la mousse, directement sous forme de mélange moussant, au moyen d'une conduite (5) raccordée à un dispositif de mélange et de transport.

4. Enveloppe, suivant l'une quelconque des revendications 1 à 3, caractérisée en ce que le dispositif de sécurité (4) réalisant le filtrage des gaz provenant de la réaction de moussage est constitué, de préférence, par une cartouche à charbon actif ou un support cellulosique imbibé de bisulfite de soude, ainsi que par des absorbeurs d'humidité tels que des gels de silice.

5. Enveloppe, suivant l'une quelconque des revendications 1 à 4, caractérisée en ce qu'elle est avantageusement réalisée en une matière souple antistatique ou non.

## Claims

1. Cover for the foaming of resins which liberate dangerous gases, in particular phenol and urea formaldehyde resins, in which the foam components are mixed, in particular to produce levelling, sealing or blocking devices, in particular in the sphere of civil engineering and mining, characterised in that it is provided, preferably in its upper portion, with a safety device (4) effecting the filtration and fixing of the liberated toxic gases during the foaming reaction.

2. Cover according to claim 1, characterised in that it is advantageously in the form of a self-inflating cushion in which the components, resin (2) and catalyst (3) of the foam are arranged under separate wrappers and are manually mixed during use of the foams after the wrappers thereof have been burst, the gases liberated during foaming being filtered and fixed in the safety device (4).

3. Cover according to claim 1, characterised in that it has a large or a very large capacity and in that it is supplied with resin and catalyst forming the components of the foam directly in the form of a foaming mixture by means of a conduit (5) connected to a mixing and conveying device.

4. Cover according to any one of claims 1 to 3, characterised in that the safety device (4) effecting filtration of the gases originating from the foaming reaction preferably consists of an activated carbon cartridge or a cellulose substrate imbibed with sodium bisulphite and of moisture absorbers such as silica gels.

5. Cover according to any one of claims 1 to 4, characterised in that it is advantageously made from a flexible material which is or is not antistatic.

## Patentansprüche

1. Sicherheitshülle für das Schäumen von gefährliche Gase freisetzenden Kunstharzen, insbesondere Phenolharzen und Harnstoff-Formaldehydharzen, in welcher die Komponenten des Schaumes gemischt werden, insbesondere zum Herstellen vom Mitteln zum Verkeilen, Verschließen oder Dämmen, in erster Linie im Bereich öffentlicher Bauvorhaben und im Bergbau, dadurch gekennzeichnet, daß sie mit einer Sicherheitseinrichtung (4) versehen ist, die vorzugsweise in ihrem oberen Abschnitt vorgesehen ist und das Filtern und Binden der toxischen Gase besorgt, welche bei der Schäum-Reaktion freigesetzt werden.

2. Sicherheitshülle nach Anspruch 1, dadurch gekennzeichnet, daß sie vorzugsweise als sich selbst aufblasendes Kissen ausgebildet ist, in welchem die Komponenten des Schaumes, nämlich ein Harz (2) und ein Katalysator (3) in getrennten Verpackung angeordnet sind und manuell bei der Verarbeitung der Schaummaterialien gemischt werden, nachdem ihre Verpackungen aufgebrochen worden sind, wobei die beim Schäumen freigesetzten Gase in der Sicherheitseinrichtung (4) ausgefiltert und gebunden werden.

3. Sicherheitshülle nach Anspruch 1, dadurch gekennzeichnet, daß sie ein großes oder sehr großes Fassungsvermögen aufweist und daß sie mit einem Harz und einem Katalysator, welche die Komponenten des Schaumes bilden, direkt in Form eines schäumenden Gemisches beschickt wird, wozu eine Leitung (5) verwendet wird, die mit einer Misch- und Fördervorrichtung verbunden ist.

4. Sicherheitshülle nach einem der Ansprüche 1 bis 3, dadurch gekennzeichnet, daß die Sicherheitseinrichtung (4), welche das Filtern der bei der Schäum-Reaktion entstehenden Gase bewerkstelligt, vorzugsweise durch eine Aktivkohlenkartusche oder ein Zellulosesubstrat, welches mit Soda-Bisulfit getränkt ist, sowie feuchtigkeitabsorbierende Materialien wie z. B. Silicagele gebildet ist.

5. Sicherheitshülle nach einem der Ansprüche 1 bis 4, dadurch gekennzeichnet, daß sie vorzugsweise aus einem flexiblen Material gefertigt ist, welches antistatisch sein kann oder auch nicht.
